Europäisches Patentamt

European Patent Office

Office européen des brevets

(11) Veröffentlichungsnummer: **0 477 590 A2**

## (12) EUROPÄISCHE PATENTANMELDUNG

(21) Anmeldenummer: **91114734.6**

(22) Anmeldetag: **02.09.91**

(51) Int. Cl.[5]: **B29C 67/22**

(30) Priorität: **25.09.90 DE 4030274**

(43) Veröffentlichungstag der Anmeldung:
**01.04.92 Patentblatt 92/14**

(84) Benannte Vertragsstaaten:
**AT BE CH DE DK ES FR GB IT LI NL SE**

(71) Anmelder: **REAL GmbH**
**Gartenweg 3**
**W-8717 Mainbernheim(DE)**

(72) Erfinder: **Hentschel, Martin**
**Gartenweg 3**
**W-8717 Mainbernheim(DE)**

(54) **Verfahren und Vorrichtung zur Herstellung enes säulenförmigen Körpers.**

(57) Ein Verfahren und eine Vorrichtung zur Herstellung eines säulenförmigen Körpers (1), bei dem ein Gemisch (2) mit einem wesentlichen Gehalt an thermoplastischen Partikeln zu einem Pastenstrang (3) erschmolzen, in eine um seine achse rotierende Bewegung versetzt und im wesentlichen in waagerechter Richtung in eine Hohlform (4) eingespeist wird. Der Pastenstrang (3) wird in der Hohlform (4) der Innenwandung (6) in Umfangsrichtung folgend zur Ablage gebracht, schleifenartig aufeinandergeschichtet und in die Gestalt des Körpers (1) überführt, wonach der Körper (1)

Fig.1

EP 0 477 590 A2

Die Erfindung betrifft ein Verfahren zur Herstellung eines säulenförmigen Körpers, bei dem ein Gemisch mit einem wesentlichen Gehalt an thermoplastischen Partikeln zu einem Pastenstrang erschmolzen, in eine Hohlform eingebracht, in der Hohlform schleifenartig aufeinandergeschichtet und in die Gestalt des Körpers überführt wird, wonach der Körper durch Abkühlung verfestigt und entnommen wird.

Ein solches Verfahren ist aus der DE PS 33 41 438 bekannt. Der mittels eines Extruders erschmolzene und in die Gestalt eines Pastenstranges überführte, thermoplastische Werkstoff wird dabei nach dem Verlassen des Extruders aufgeschäumt und in dem Zwischenraum zwischen zwei sich kontinuierlich von der Austrittsöffnung des Extruders weg bewegenden Siebbändern zur Ablage gebracht. Das Verhältnis aus der Zuführgeschwindigkeit des Stranges und der Abzugsgeschwindigkeit der Siebbänder ist dabei auf einen Wert eingestellt, der mit dem Verhältnis aus dem Abstand der Siebbänder und der Dicke des Stranges im wesentlichen übereinstimmt. Die Dichte der erhaltenen Schaumstoffplatte stimmt dadurch im wesentlichen mit derjenigen des aufgeschäumten Stranges überein. Sie ist dementsprechend gering und läßt es nicht zu, eine solche Platte als statisch tragendes Konstruktionselement zu verwenden. Durch die beweglichen Siebbänder ist die zur Durchführung dieses bekannten Verfahrens benötigte Einrichtung außerdem sehr kompliziert und störanfällig. Die damit erzeugbaren Teile können grundsätzlich auch nur von plattenförmiger Gestalt sein und die bei ihrer Herstellung erzielbare Geschwindigkeit ist wegen der Unmöglichkeit, die Wärme schneller abzuführen, sehr gering.

Der Erfindung liegt die Aufgabe zugrunde, ein solches Verfahren derart weiter zu entwickeln, daß in vergleichsweise kürzerer Zeit säulenförmige Körper eines beliebigen Profils erhalten werden können, die sich durch eine bessere Festigkeit auszeichnen.

Diese Aufgabe wird erfindungsgemäß bei einem Verfahren der eingangs genannten Art mit den kennzeichnenden Merkmalen von Anspruch 1 gelöst. Auf vorteilhafte Ausgestaltungen nehmen die Ansprüche 2 bis 4 Bezug.

Bei dem erfindungsgemäßen Verfahren ist es vorgesehen, daß der Pastenstrang um seine Achse rotierend im wesentlichen in waagerechter Richtung in die Hohlform eingespeist, in der Hohlform der Innenwandung in Umfangsrichtung folgend zur Ablage gebracht wird und daß die Einspeisung fortgesetzt wird, bis die Innenwandung von Bestandteilen des Pastenstranges kontinuierlich durchgehend benetzt ist. Auf den Pastenstrang wirken während des Einbringens in die Hohlform verschiedene Kräfte ein. Der Pastenstrang hat stets einen geringeren Durchmesser als die Hohlform. Sein vorderes Ende sinkt hierdurch und durch die gute plastische Verformbarkeit nach der Einspeisung in der Hohlform ab und gelangt in einen Berührungskontakt mit deren Innenwandung, wobei sich eine gewisse gegenseitige Verklebung ergibt. Der Pastenstrang befindet sich neben der vorwärts gerichteten zugleich in einer rotierenden Bewegung. Die nachfolgend eingespeisten Bestandteile des Pastenstranges werden dadurch, der Umfangsrichtung folgend, kontinuierlich fortschreitend in der Hohlform zur Ablage gebracht, wobei sich eine gegenseitige Verklebung zunächst mit der Innenwandung und anschließend mit bereits abgelegten Bestandteilen des Pastenstranges ergibt, bis der zur Verfügung stehende Freiraum zwischen den abgelegten Bestandteilen und der Austrittsöffnung des Extruders ausgefüllt ist. Der weiterhin in gleicher Weise zugeführte Pastenstrang bewirkt anschließend eine soweit gehende Relativ- und Umverlagerung der bereits abgelegten Bestandteile in der Hohlform, daß es zu einem Aufbrechen der ursprünglichen Verklebung des Pastenstranges mit der Innenwandung kommt sowie zu einer Überführung der ursprünglichen Gestalt des Pastenstranges in die Form des Körpers. Dieser wird dabei fortschreitend im Bereich seiner Rückseite durch neue Teilabschnitte ergänzt, während seine Vorderseite die säulenförmige Hohlform durchwandert und schließlich in Eingriff mit dem vorderen Ende der Hohlform gelangt. Zweckmäßigerweise ist in diesem Bereich eine Meßeinrichtung vorgesehen, welche die Fertigformung des neugebildeten Körpers signalisiert. Dieser wird nachfolgend durch Abkühlung verfestigt, wobei sich schrumpfungsbedingt eine Verringerung seines Durchmessers und eine Spaltbildung in bezug auf die Innenwandung der Hohlform ergibt. Die Entnahme kann dadurch äußerst einfach und unter Anwendung eines fließfähigen Druckmittels erfolgen, beispielsweise unter Anwendung von Druckluft.

Das erfindungsgemäße Verfahren eignet sich besonders gut für die Verarbeitung von Kunststoffabfällen zu neuen Produkten. Die Kunststoffabfälle müssen hierzu in dem Maße zerkleinert und miteinander durchmischt werden, daß eine problemlose Einspeisung in den Extruder möglich ist. Neben den thermoplastischen Bestandteilen, beispielsweise solchen auf Polyolefin- oder PVC- Basis können nichtthermoplastische Bestandteile in dem Gemisch enthalten sein, beispielsweise mineralische Füllstoffe und/oder Gummiabfälle. Die Farbe der erhaltenen Körper läßt sich hierdurch ebensogut bestimmten Erfordernissen des Anwendungsfalles anpassen wie die mechanische, thermische und chemische Beständigkeit. Die Ausgangsmaterialien können beliebig gestaltet sein und beispielsweise Formteile und Folien in bedruckter oder unbedruckter Form umfassen.

Für die Durchführung des erfindungsgemäßen Verfahrens empfiehlt sich die Verwendung einer Vorrichtung, welche die Merkmale von Anspruch 5 aufweist. Auf vorteilhafte Ausgestaltungen nehmen die Ansprüche 6 bis 9 bezug.

Bei einer Vorrichtung nach dem Gattungsbegriff ist es somit erfindungsgemäß vorgesehen, daß der Extruder nur eine Extruderschnecke aufweist und daß die Extruderschnecke, die Austrittsöffnung und die Hohlform koaxial zueinander angeordnet sind. Die Rotationsbewegung läßt sich hierdurch am besten der Austriebsbewegung des Pastenstranges überlagern. Das Verhältnis aus dem freien Durchmesser D1 der Austrittsöffnung und dem freien Durchmesser D2 des Extruders sollte möglichst in dem Bereich zwischen 0,3 und 0,8 liegen.

Als vorteilhaft hat es sich aus dem gleichen Grunde bewährt, wenn die Austrittsöffnung von kreisförmigem Profil ist. Die erwünschte, rotierende Bewegung des Pastenstranges um seine Achse wird hierdurch begünstigt. Das Verhältnis aus der Länge und dem Durchmesser der Austrittsöffnung sollte außerdem so gering wie möglich sein und den Faktor 1 nicht überschreiten.

Der Extruder soll nach Möglichkeit nicht über eine Entgasungseinrichtung verfügen. Die mit dem Pastenstrang ausgestoßenen Luft- und/oder Gasblasen sind bei Verwendung einer solchen Ausführung überraschender Weise nicht gleichmäßig über den gesamten Querschnitt des erhaltenen Körpers verteilt sondern auf eine Kernzone des Profils beschränkt, welche außen von einem völlig porenfreien Randbereich umschlossen ist. Der Randbereich ist in allen Umfangsbereichen von einer annähernd übereinstimmenden Breite und die Kernzone und der Randbereich heben sich optisch in klarer Weise voneinander ab. Lunkerbildungen im Bereich der äußeren Oberfläche wurden nicht beobachtet. Die Außenseite des Körpers kann vielmehr willkürlich strukturiert werden, was unter geschmacklichen Gesichtspunkten von großem Vorteil ist. Der vorstehend beschriebene Aufbau des Profils bedingt außerdem, bezogen auf das Gewicht des Körpers, eine besonders große Knick- und Biegefestigkeit.

Neben der vorstehend beschriebenen Hohlform können einem Extruder zumindest zwei weitere Hohlformen zugeordnet sein, wobei die einzelnen Hohlformen quer zur Austrittsöffnung des Extruders bewegbar und wahlweise vor der Austrittsöffnung positionierbar sind. Die Produktionsgeschwindigkeit bei der Herstellung des Körpers läßt sich hierdurch wesentlich erhöhen, dergestalt, daß sich jeweils eine Hohlform in der Entleerungsposition befindet, eine Hohlform in der Befüllungsposition und eine Hohlform in der Abkühlposition.

Die einzelnen Hohlformen können bei einer solchen Ausführung der Vorrichtung in einem Revolver zusammengefaßt sein, der um eine Achse drehbar ist, die sich parallel zu der Achse des Extruders erstreckt. Der für die Relativbewegung der einzelnen Hohlformen benötigte Antrieb läßt sich hierdurch technisch vereinfachen.

Der Revolver kann zumindest bis zu seiner Achse in ein Wasserbad eintauchend angeordnet sein, wobei der Extruder und eine Auffangwanne für aus der Hohlform ausgestoßene Körper oberhalb des Wasserspiegels nebeneinanderliegend angeordnet sind. Bei einer kompakten und platzsparenden Bauweise resulieren bei einer solchen Bauweise besonders günstige Möglichkeiten, die Produktion des Körpers in vollem Umfang zu automatisieren.

Das Profil des säulenförmigen Körpers kann gemäß der vorliegenden Erfindung nahezu beliebig gestaltet werden. Neben kreisförmig begrenzten Ausführungsformen lassen sich Stern- und Polygonprofile problemlos erzeugen. Bei Rechteckprofilen können die Randzonen beliebig gestaltet und beispielsweise mit Ein- und/oder Auswölbungen versehen werden. Auf diese Weise ist es beispielsweise möglich, sogenannte Profilbretter nahezu identisch nachzubilden, die mit Nut und Feder versehen und hierdurch ineinanderfügbar und zu großen Flächengebilden vereinbar sind. Das Verhältnis aus der Tiefe und Breite entsprechender Profile kann problemlos 1:4 bis 1:6 betragen. Auf eine diesbezügliche Verwendung des erfindungsgemäßen Verfahrens und der Vorrichtung bei der Herstellung entsprechender Körper nehmen die Ansprüche 10 bis 13 bezug.

Die innerhalb des erfindungsgemäßen Verfahrens zur Anwendung gelangende Hohlform kann sehr einfach gestaltet sein und beispielsweise aus einem dünnwandigen Rohr aus metallischem Werkstoff bestehen. Sie wird zweckmäßig erst nach dem Erreichen der kontinuierlich durchgehenden Benetzung ihrer Innenwandung mit Bestandteilen des Pastenstranges durch ein sekundäres Kühlmittel gekühlt, um eine übereinstimmende Ausbildung der Innen- und der Außenstruktur des gebildeten Körpers auf seiner gesamten Länge zu gewährleisten. Im Anschluß hieran kann die Abkühlung des gebildeten Körpers mit intensiven Mitteln erfolgen, beispielsweise durch unmittelbares Eintauchen der gefüllten Hohlform in ein Wasserbad. Die porenfreie Randzone des gebildeten Körpers bedingt dabei eine zügige Abkühlung und Verfestigung der für die Formbeständigkeit maßgeblichen Bereiche. Die Entformung kann bereits nach kurzer Zeit erfolgen, was unter wirtschaftlichen Gesichtspunkten von großem Vorteil ist.

Der Gegenstand der Erfindung wird nachfolgend anhand der in der Anlage beigefügten Zeichnung weiter verdeutlicht. Es zeigen:

Fig.1 schematisch in längs geschnittener

Darstellung eine beispelhafte Vorrichtung zur Durchführung des erfindungsgemäßen Verfahrens.

Fig.2     die Vorrichtung gemäß Fig.1 in einer Ansicht von oben.

Fig.3     das Prinzip der Einspeisung des Pastenstranges in die Hohlform.

Fig.4-7   einige bespielhafte Profilformen von säulenförmigen Körpern, die nach dem erfindungsgemäßen Verfahren erhältlich sind.

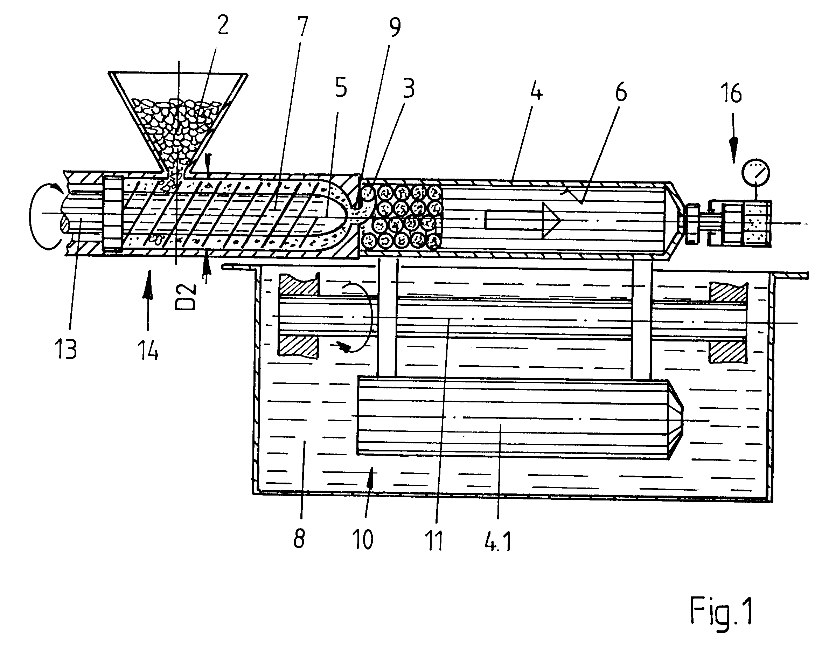

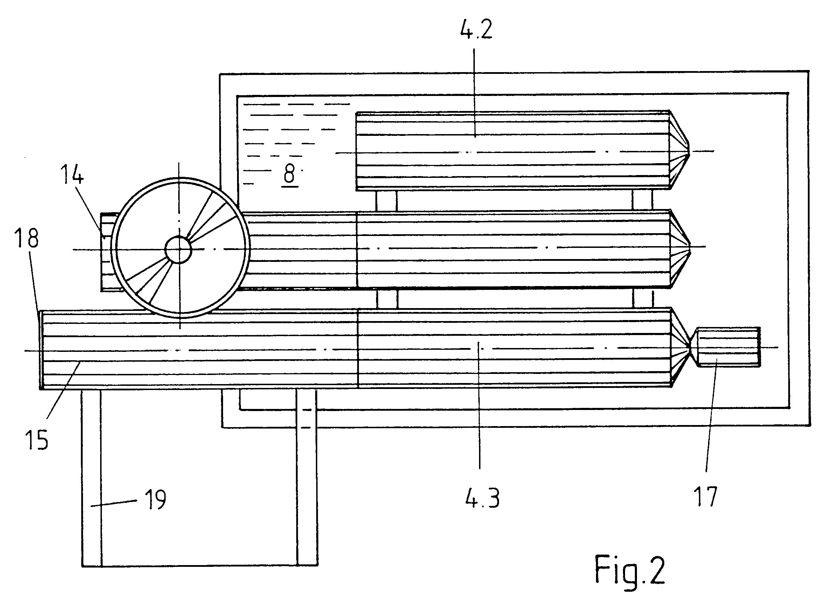

Die in den Figuren 1 und 2 gezeigte Vorrichtung besteht aus einem Extruder 14, der oberhalb eines Wasserbades 8 angeodnet ist.

Der Extruder 14 weist ein Extrudergehäuse auf, in dem eine Extruderschnecke 7 mittels einer Antriebswelle 13 relativ verdrehbar angeordnet ist. Die Extruderschnecke 7 ist auf ihrem Außenumfang mit gewindegangartig ausgebildeten Stegen versehen, durch die das mittels eines Trichters am linken Ende eingefüllte Kunststoffgranulat 2 in eine fortschreitende, nach rechts gerichtete Vorwärtsbewegung versetzbar ist. Das Extrudergehäuse weist einen Innendurchmesser D 2 auf, der am vorderen Ende im Bereich der Austrittsöffnung 9 auf einen kleineren Durchmesser D 1 verengt ist. Das am linken Ende eingegebene Kunststoffgranulat 2 kann den Extruder 14 hierdurch nicht unverändert passieren sondern es wird einer starken Walkbeanspruchung ausgesetzt, die ein Erschmelzen und eine intensive Durchmischung des durch den Trichter zugeführten Kunststoffgranulates 2 bedingt. Das Verhältnis aus den Durchmessern D 2 und D 1 beträgt etwa 4. Der aus der Austrittsöffnung 9 austretende Kunststoff hat dadurch die Form eines im wesentlichen homogen zusammengesetzten, zähviskosen Pastenstranges, der sich in einer rotierenden Vorwärtsbewegung nach rechts befindet.

Dem Extruder 14 ist auf der rechten Seite eine Hohlform 4 vorgelagert, welche durch ein dünnwandiges, metallisches Rohr gebildet ist, das mittels einer Andrückeinrichtung 16 an die Stirnseite des Extruders 14 angedrückt wird. Die Hohlform 4 ist der Austrittsöffnung 9 und der Extruderschnecke 8 in koaxialer Weise zugeordnet. Sie ist in einem Revolver 10 gelagert, der neben der Hohlform 4 noch weitere Hohlformen 4.1 bis 4.3 umfaßt und um eine Achse 11 verdrehbar ist, die sich parallel zu der Achse des Extruders 14 erstreckt. Die einzelnen Hohlformen können dadurch quer zur Austrittsrichtung des Extruders bewegt und wahlweise vor der Austrittsöffnung 9 positioniert werden. Die in dem Revolver 10 enthaltenen Hohlformen sind stets von säulenförmiger Gestalt und von der linken Seite zentrisch zur Achse befüllbar. Sie können sich bei Gewährleistung dieser Bedingung durch eine voneinander abweichende Profilform voneinander unterscheiden.

Der Revolver 10 ist in ein Wasserbad 8 eintauchend angeordnet, wobei seine Achse 11 von dem Wasserspiegel überflutet wird. Die Temperatur des Wasserbades 8 kann der Raumtemperatur entsprechen.

Oberhalb des Wasserbades 8 ist neben dem Extruder 14 liegend, eine Auffangwanne 15 angeordnet. Diese dient der Aufnahme von fertiggestellten Körpern 1, welche in dem vorliegenden Beispiel durch die Einspeisung von Druckluft mittels eines Mundstückes 17 in das rechte Ende der gefüllten Hohlform 4.3 (dem eingetragenen Pfeil entsprechend) aus der Hohlform 4.3 ausgestoßen werden. Ein Wegbegrenzer 18 gewährleistet hierbei eine übereinstimmende Positionierung der ausgestoßenen Körper 1 in der Wanne 15. Diese kann anschließend um ihre Achse (in der Zeichenebene) nach unten geschwenkt werden, wodurch der enthaltene Körper 1 in einer Sammeleinrichtung 19 gelangt, die beispielsweise aus einer Transportpalette oder ähnlichem bestehen kann.

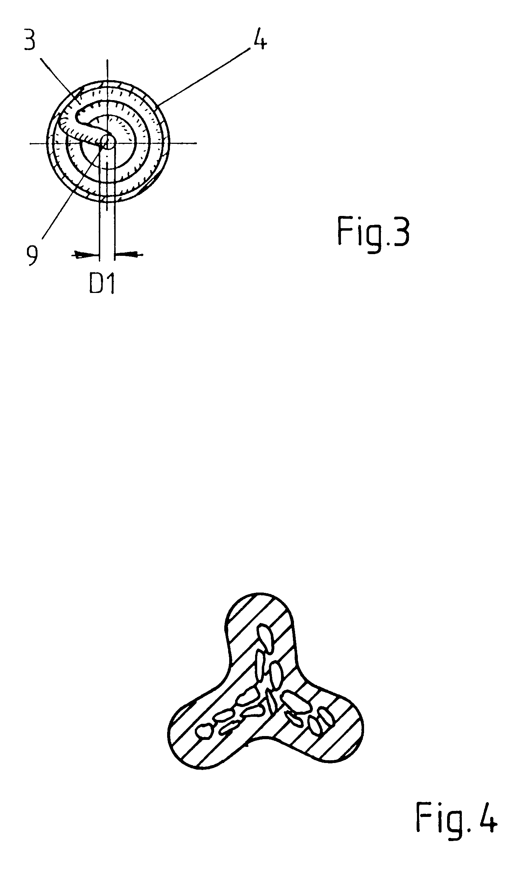

In Figur 3 ist die Einspeisung des Pastenstranges 3 in das Innere einer Hohlform 4 schematisch angedeutet. Der Pastenstrang 3 gelangt dabei durch die Austrittsöffnung 9 des Extruders 14 um seine Achse rotierend und in einer Vorwärtsbewegung befindlich zentral am stirnseitigen Ende in die Hohlform 4, welche von einer starren Innenwandung umschlossen und in bezug auf die Austrittsöffnung 9 in starrer Weise festgelegt ist. Der Pastenstrang 3 befindet sich in einem leicht verformbaren Zustand und legt sich, bedingt durch die Schwerkraft, zunächst unterhalb der Austrittsöffnung 9 an die Innenwandung der Hohlform 4 an, wo sich durch die adhäsiven Eigenschaften des Pastenstranges 3 eine gewisse gegenseitige Verklebung mit der Hohlform 4 ergibt. Bedingt durch die Nachführung von weiteren, um ihre Achse rotierenden Bestandteilen des Pastenstranges 3 erfolgt die weitere Ablagerung in Umfangsrichtung der Hohlform 4, wobei sich eine gegenseitige Verklebung mit der Innenwandung 6 beziehungsweise mit zuvor abgelegten Bestandteilen des Pastenstranges 3 ergibt. Der zunächst verfügbare Freiraum zwischen abgelegten Bestandteilen des Pastenstranges 3 und der Austrittsöffnung 9 wird hierdurch völlig ausgefüllt, so daß sich anschließend eine Umverlagerung von bereits abgelegten Bestandteilen in noch verfügbare Freiräume unter Bildung eines ersten Teilabschnittes des säulenförmigen Körpers ergibt. Zugleich wird die zunächst vorhandene Verklebung mit der Innenwandung 6 der Hohlform 4 zerstört und, während am linken Ende ständig neue Bestandteile des Körpers 1 gebildet werden, das rechte Ende des Körpers zunehmend in Richtung des in die Hohlform 4 eingezeichneten, offenen Pfeils nach rechts verlagert. Der Vorgang wird solange fortgesetzt, bis die Form 4 vollständig gefüllt und die Innenwandung 6 kontinuierlich durchgehend von Bestandteilen des Pastenstranges 3 benetzt ist. Das Erreichen des diesbezüglichen Zustandes wird durch eine Meßeinrichtung 16 erfaßt. Diese ist signalleitend mit einem Schrittschaltwerk verbunden, welche beim Eintreten des angegebenen Zustandes eine Unterbrechung der Förderung des Extruders auslöst sowie eine Schwenkung des Revolvers 10 um seine Achse. Die befüllte, in heißem Zustand befindliche Hohlform 4 wird dabei in das Wasserbad 8 getaucht, eine zuvor in dem Wasserbad abgekühlte, befüllte Hohlform 4.1 in eine Entladeposition vor der Auffangwanne 15 gebracht und eine zuvor in der Entladeposition befindliche, weitere Hohlform in die Befüllposition überführt. Der Extruder 14 kann anschließend erneut in Betrieb gesetzt und durch Einspeisung von Druckluft über das Mundstück 17 eine Entleerung der in der Entladeposition befindlichen Hohlform 4.3 bewirkt werden, um den nächsten Arbeitszyklus einzuleiten.

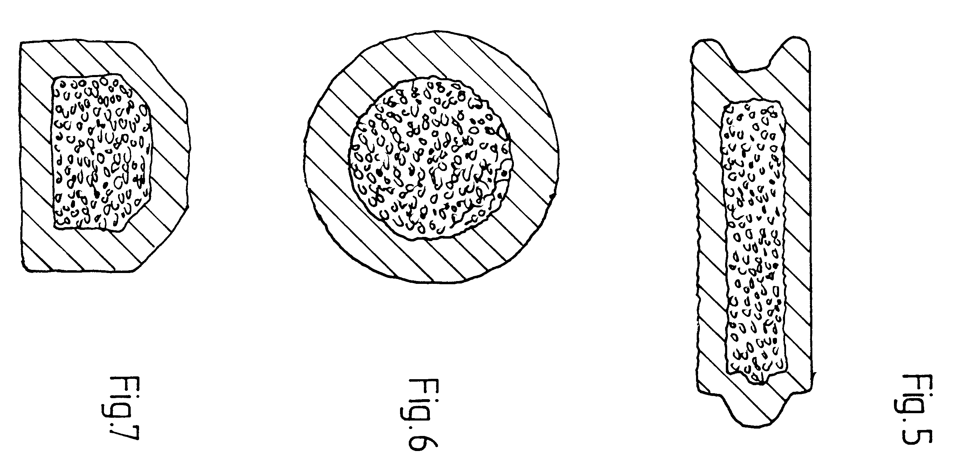

Die Figuren 4-7 zeigen beispielhafte Formen des Außenprofils und der Innenstruktur von säulenförmigen Körpern, die sich mit dem erfindungsgemäßen Verfahren und der gezeigten Vorrichtung erhalten lassen. Allen Körpern ist gemeinsam, daß sie neben einer nahezu porenfreien Randzone von im wesentlichen übereinstimmender Breite eine in nahezu schaumförmigem Zustand befindliche Kernzone aufweisen. Die Körper zeichnen sich neben einer guten mechanischen Widerstandsfähigkeit durch eine ausgezeichnete chemische Beständigkeit aus. Die Oberfläche ist völlig geschlossen und kann in beliebiger Weise strukturiert werden, was in ästhetischer Hinsicht von großem Vorteil ist. Holz- und lederartig erscheinende Narbungen lassen sich problemlos erzeugen.

**Patentansprüche**

1. Verfahren zur Herstellung eines säulenförmigen Körpers, bei dem ein Gemisch mit einem wesentlichen Gehalt an thermoplastischen Partikeln zu einem Pastenstrang erschmolzen, in eine Hohlform eingebracht, in der Hohlform schleifenartig aufeinandergeschichtet und in die Gestalt des Körpers überführt wird, wonach der Körper durch Abkühlung verfestigt und entnommen wird, dadurch gekennzeichnet, daß der Pastenstrang (3) um seine Achse rotierend im wesentlichen in waagerechter Richtung stirnseitig in die Hohlform (4) eingespeist und in der Hohlform (4) der Innenwandung (6) in Umfangsrichtung folgend zur Ablage gebracht wird und daß die Einspeisung fortgesetzt wird, bis die Innenwandung (6) von Bestandteilen des Pastenstranges (3) kontinuierlich durchgehend benetzt ist.

2. Verfahren nach Anspruch 1, dadurch gekennzeichnet, daß der Pastenstrang (3) durch die Extruderschnecke (7) eines Einschneckenextruders (14) in die rotierende Bewegung versetzt wird.

3. Verfahren nach Anspruch 1 oder 2, dadurch gekennzeichnet, daß die Hohlform (4) nach Erreichen der kontinuierlich durchgehenden Benetzung ihrer Innenwandung (6) durch ein sekundäres Kühlmittel gekühlt wird.

4. Verfahren nach Anspruch 3, dadurch gekennzeichnet, daß die Hohlform (4) durch Eintauchen in ein Wasserbad (8) gekühlt wird.

5. Vorrichtung zur Durchführung des Verfahrens nach mindestens einem der Ansprüche 1 - 4, bei der ein Extruder mit einer Extruderschnecke und einer kreisförmig begrenzten Austrittsöffnung für das Erschmelzen des Gemisches vorgesehen ist sowie eine Einrichtung zur Formgebung des Körpers, wobei die Extruderschnecke, die Austrittsöffnung und die Einrichtung zur Formgebung koaxial zueinander angeordnet sind, dadurch gekennzeichnet, daß der Extruder (14) nur eine Extruderschnecke (7) aufweist und daß die Einrichtung zur Formgebung aus einer Hohlform bestht, die von starren Innenwänden (6) umschlossen ist. umfaßt.

6. Vorrichtung nach Anspruch 5, dadurch gekennzeichnet, daß die Austrittsöffnung (9) einen freien Durchmesser D1 aufweist der 0,3 bis 0,8 mal so groß wie der freie Durchmesser D2 des Extruders (14).

7. Vorrichtung nach Anspruch 5 bis 6, dadurch gekennzeichnet, daß neben der Hohlform (4) zumindest zwei weitere Hohlformen (4.1 bis 4.3) vorgesehen sind und daß die Hohlformen (4 bis 4.3) quer zur Austrittsrichtung des Extruders (14) bewegbar und wahlweise vor der Austrittsöffnung (9) positionierbar sind.

8. Vorrichtung nach Anspruch 7, dadurch gekennzeichnet, daß alle Hohlformen (4 bis 4.3) in einem Revolver (10) zusammengefaßt und um eine gemeinsame Achse (11) drehbar sind, die sich parallel zu der Achse (5) des Extruders (14) erstreckt.

9. Vorrichtung nach Anspruch 8, dadurch gekennzeichnet, daß der Revolver (10) zumindest bis zu seiner Achse (11) in ein Wasserbad (8) eintauchend angeordnet ist und daß der Extruder (14) und eine Auffangwanne (15) für aus den Hohlformen (4) ausgestoßene Körper oberhalb des Wasserbades (8) nebeneinander liegend angeordnet sind.

10. Verwendung des Verfahrens nach mindestens einem der Ansprüche 1 bis 4 zur Herstellung eines säulenförmigen Körpers mit einem kreisförmigen Profil, das eine geschäumte Kernzone und eine ungeschäumte Randzone aufweist.

11. Verwendung des Verfahrens nach mindestens einem der Ansprüche 1 bis 4 zur Herstellung eines säulenförmigen Körpers mit einem polygonförmigen Profil, das eine geschäumte Kernzone und eine ungeschäumte Randzone aufweist.

12. Verwendung des Verfahrens nach mindestens einem der Ansprüche 1 bis 4 zur Herstellung eines säulenförmigen Körpers mit einem sternförmigen Profil, das eine geschäumte Kernzone und eine ungeschäumte Randzone aufweist.

13. Verwendung des Verfahrens nach mindestens einem der Ansprüche 1 bis 4 zur Herstellung eines säulenförmigen Körpers mit einem rechteckigen Profil, das eine geschäumte Kernzone und eine ungeschäumte Randzone aufweist sowie eine Aus- oder Einwölbung im Bereich von zumindest einer Seitenfläche.

14. Verwendung der Vorrichtung nach mindestens einem der Anspüche 5 - 9 zur Herstellung eines säulenförmigen Körpers mit einem kreisförmigen Profil, das eine geschäumte Kernzone und eine ungeschäumte Randzone aufweist.

15. Verwendung der Vorrichtung nach mindestens einem der Ansprüche 5 - 9 zur Herstellung eines säulenförmigen Körpers mit einem polygonförmigen Profil, das eine geschäumte Kernzone und eine ungeschäumte Randzone aufweist.

16. Verwendung der Vorrichtung nach mindestens einem der Ansprüche 5 - 9 zur Herstellung eines säulenförmigen Körpers mit einem sternförmigen Profil, das eine geschäumte Kernzone und eine ungeschäumte Randzone aufweist.

17. Verwendung der Vorrichtung nach mindestens einem der Ansprüche 5 - 9 zur Herstellung eines säulenförmigen Körpers mit einem rechteckigen Profil, das eine geschäumte Kernzone und eine ungeschäumte Randzone aufweist sowie eine Aus- oder Einwölbung im Bereich von zumindest einer Seitenfläche.

Fig.1

Fig.2

EP 0 477 590 A2

Fig.3

Fig.4

Fig.5

Fig.6

Fig.7